(19) Europäisches Patentamt
European Patent Office
Office européen des brevets

(11) Veröffentlichungsnummer : **0 503 339 B1**

(12) # EUROPÄISCHE PATENTSCHRIFT

(45) Veröffentlichungstag der Patentschrift :
**22.06.94 Patentblatt 94/25**

(51) Int. Cl.$^5$ : **C09B 62/04,** C09B 62/51, C09B 62/245, // D06P1/38

(21) Anmeldenummer : **92103014.4**

(22) Anmeldetag : **22.02.92**

(54) **Reaktivfarbstoffe mit einer Kupplungskomponente aus der Hydroxypyridonreihe.**

(30) Priorität : **08.03.91 DE 4107377**

(43) Veröffentlichungstag der Anmeldung :
**16.09.92 Patentblatt 92/38**

(45) Bekanntmachung des Hinweises auf die Patenterteilung :
**22.06.94 Patentblatt 94/25**

(84) Benannte Vertragsstaaten :
**CH DE FR GB IT LI**

(56) Entgegenhaltungen :
**EP-A- 0 316 778**
**EP-A- 0 356 860**
**DE-A- 3 538 517**
**FR-A- 2 134 701**

(73) Patentinhaber : **BASF Aktiengesellschaft**
**Carl-Bosch-Strasse 38**
**D-67063 Ludwigshafen (DE)**

(72) Erfinder : **Jessen, Jörg L., Dr.**
**Maulbeerstueck 20**
**W-6720 Speyer (DE)**
Erfinder : **Ruske, Manfred**
**Merziger Strasse 10**
**W-6700 Ludwigshafen (DE)**
Erfinder : **Kessel, Knut, Dr.**
**Berliner Strasse 18**
**W-6800 Mannheim 1 (DE)**
Erfinder : **Patsch, Manfred, Dr.**
**Fritz-Wendel-Strasse 4**
**W-6706 Wachenheim (DE)**

EP 0 503 339 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Reaktivfarbstoffe mit einer Kupplungskomponente aus der Hydroxypyridonreihe

Die vorliegende Erfindung betrifft neue Reaktivfarbstoffe der Formel I

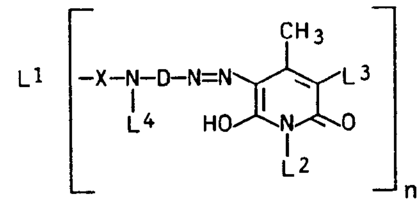

(I),

in der

n 1 oder 2,

X im Fall a), wenn n für 1 steht, einen Rest der Formel IIa, IIb oder IIc

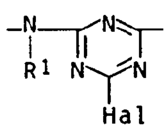 , 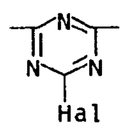 , 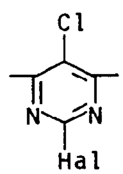 ,

(IIa) (IIb) (IIc)

worin $R^1$ für Wasserstoff oder $C_1$-$C_4$-Alkyl und Hal für Fluor oder Chlor stehen, oder im Fall b), wenn n für 2 steht, einen Rest der obengenannten Formel IIa,

$L^1$ im Fall a1), wenn n für 1 und X für einen Rest der Formel IIb oder IIc stehen, Fluor, Chlor, $C_1$-$C_4$-Alkoxy oder Phenoxy,
im Fall a2), wenn n für 1 und X für einen Rest der Formel IIa stehen, $C_1$-$C_4$-Alkyl oder Phenyl, das gegebenenfalls durch Hydroxysulfonyl, Vinylsulfonyl oder den Rest

$$-SO_2-C_2H_4-Z,$$

worin Z für eine unter alkalischen Reaktionsbedingungen abspaltbare Gruppe steht, einfach oder zweifach substituiert ist, oder
im Fall b1), wenn n für 2 und X für einen Rest der Formel IIa stehen, ein Brückenglied, das eine oder zwei Hydroxysulfonylgruppen aufweist,

D den Rest einer Diazokomponente aus der Anilin- oder Aminonaphthalinreihe, der mindestens eine Hydroxysulfonylgruppe aufweist,

$L^2$ Wasserstoff oder $C_1$-$C_8$-Alkyl, das gegebenenfalls durch Hydroxy substituiert ist und durch ein oder zwei Sauerstoffatome in Etherfunktion unterbrochen sein kann,

$L^3$ den kationischen Rest eines fünf- oder sechsgliedrigen aromatischen Heterocyclus, der mindestens ein Stickstoffatom und gegebenenfalls ein oder zwei weitere Heteroatome, ausgewählt aus der Gruppe, bestehend aus Stickstoff, Sauerstoff und Schwefel, aufweist und der über das Stickstoffatom an den Pyridonring geknüpft ist, und

$L^4$ Wasserstoff oder $C_1$-$C_4$-Alkyl bedeuten,

mit der Maßgabe, daß die Anzahl der Hydroxysulfonylgruppen im Molekül die der kationischen Gruppen um mindestens eins übersteigt, sowie die Verwendung der neuen Farbstoffe zum Färben oder Bedrucken von Hydroxygruppen oder Stickstoff enthaltenden Substraten.

Aus der DE-A-2 752 282 oder der US-A-4 673 735 sind basische Azofarbstoffe bekannt, deren Kupplungskomponente sich von Hydroxypyridonen ableitet, die u.a. einen Pyridiniumrest aufweisen.

Aufgabe der vorliegenden Erfindung war es, neue Reaktivfarbstoffe auf Azobasis bereitzustellen, die sich ebenfalls von einem Hydroxypyridonderivat mit einem kationischen heterocyclischen Rest ableiten. Die neuen Farbstoffe sollten bei ihrer Anwendung gute Naßechtheiten und eine gute Lichtechtheit aufweisen.

Demgemäß wurden die eingangs näher bezeichneten Reaktivfarbstoffe der Formel I gefunden.

Alle in der obengenannten Formel I auftretenden Alkylgruppen können sowohl geradkettig als auch ver-

zweigt sein.

Reste $L^2$, $L^4$ und $R^1$ sind z.B. Methyl, Ethyl, Propyl, Isopropyl, Butyl, Isobutyl oder sec-Butyl.

Reste $L^2$ sind weiterhin z.B. Pentyl, Isopentyl, Neopentyl, tert-Pentyl, Hexyl, 2-Methylpentyl, Heptyl, 2-Methylhexyl, Octyl, 2-Methylheptyl, 2-Ethylhexyl, 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 2- oder 4-Butoxybutyl, 4,8-Dioxadecyl, 2-Hydroxyethyl, 2- oder 3-Hydroxypropyl, 2- oder 4-Hydroxybutyl, 5-Hydroxy-3-oxapentyl, 6-Hydroxy-4-oxahexyl, 8-Hydroxy-4-oxaoctyl oder 9-Hydroxy-4,7-dioxanonyl.

Im Fall a1), wenn n für 1 und X für einen Rest der Formel IIb oder IIc stehen, sind Reste $L^1$ z.B. Methoxy, Ethoxy, Propoxy, Isopropoxy, Butoxy, Isobutoxy oder sec-Butoxy.

Im Fall a2), wenn n für 1 und X für einen Rest der Formel IIa stehen, sind Reste $L^1$ z.B. Methyl, Ethyl, Propyl, Isopropyl, Butyl, Isobutyl, sec-Butyl, Phenyl, 2-, 3- oder 4-Hydroxysulfonylphenyl, 2,3-, 2,4-, 2,5-, 2,6-, 3,4- oder 3,5-Dihydroxysulfonylphenyl, 2-, 3- oder 4-Vinylsulfonylphenyl oder ein Rest der Formel

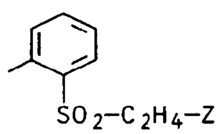 , 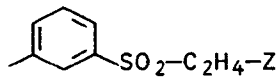 oder 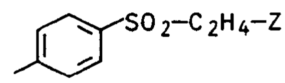 .

Z steht dabei für eine unter alkalischen Reaktionsbedingungen abspaltbare Gruppe. Solche Gruppen sind z.B. Chlor, Brom, $C_1$-$C_4$-Alkylsulfonyl, Phenylsulfonyl, $OSO_3H$, $SSO_3H$, $OP(O)(OH)_2$, $C_1$-$C_4$-Alkylsulfonyloxy, gegebenenfalls substituiertes Phenylsulfonyloxy, $C_1$-$C_4$-Alkanoyloxy, $C_1$-$C_4$-Dialkylamino oder ein Rest der Formel

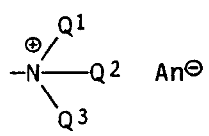 , 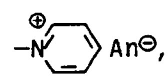 , 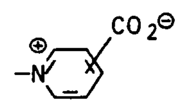 oder 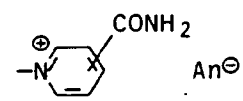 ,

wobei $Q^1$, $Q^2$ und $Q^3$ gleich oder verschieden sind und unabhängig voneinander jeweils die Bedeutung von $C_1$-$C_4$-Alkyl oder Benzyl und $An^{\ominus}$ jeweils die Bedeutung eines Anions besitzen. Als Anion $An^{\ominus}$ kann dabei z.B. Fluorid, Chlorid, Bromid, Iodid, Mono-, Di- oder Trichloracetat, Methylsulfonat, Phenylsulfonat oder 2- oder 4-Methylphenylsulfonat in Betracht kommen.

Im Fall b1), wenn n für 2 und X für einen Rest der Formel IIa stehen, bedeutet $L^1$ ein Brückenglied, das eine oder zwei Hydroxysulfonylgruppen aufweist.

Geeignete Brückenglieder sind z.B. Mono- oder Dihydroxysulfonylphenylen, wie 4-Hydroxysulfonyl-1,2-phenylen oder 2,5-Dihydroxysulfonyl-1,4-phenylen, Mono- oder Dihydroxysulfonylbiphenylen, wie 2-Hydroxysulfonyl-4,4'biphenylen oder 2,2'-Dihydroxysulfonyl-4,4'-biphenylen, Mono- oder Dihydroxysulfonylstilbendiyl, wie

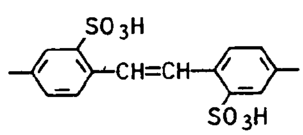 ,

oder Mono- oder Dihydroxysulfonyl-4,4'-ureylen-bis-phenyl, wie

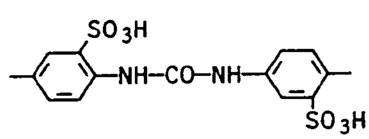 .

Reste D leiten sich z.B. von Diazokomponenten aus der Anilin- oder Aminonaphthalinreihe ab, wobei diese

über mindestens eine, vorzugsweise eine oder zwei Hydroxysulfonylgruppen als Substituenten verfügen.

Beispielhaft seien die folgenden Diazokomponenten $L^4$-NH-D-$NH_2$ genannt, worin $L^4$ jeweils die obengenannte Bedeutung besitzt:

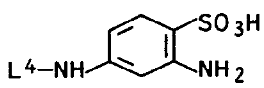 , 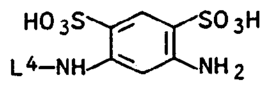 , 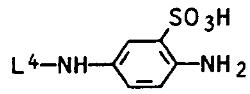 ,

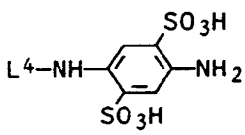 , 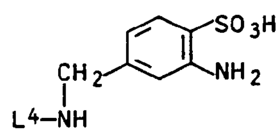 , 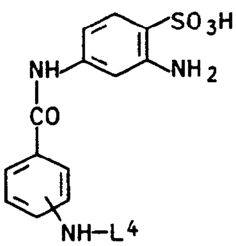 ,

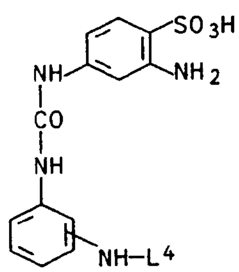 , 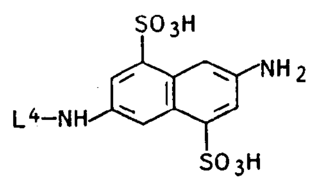

oder

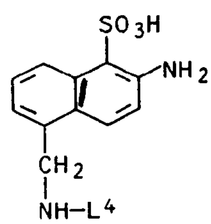 .

Geeignete Heterocyclen, von denen sich der Rest $L^3$ ableitet, stammen z.B. aus der Klasse der Pyrrole, Pyrazole, Imidazole, Oxazole, Isoxazole, Thiazole, Isothiazole, Triazole, Oxdiazole, Thiadiazole, Pyridine, Pyridazine, Pyrimidine oder Pyrazine. Diese Reste können z.B. durch $C_1$-$C_{18}$-Alkyl, insbesondere $C_1$-$C_4$-Alkyl, oder Carboxyl substituiert sein.

Hervorzuheben sind dabei Heterocyclen aus der Klasse der Imidazole oder Pyridine. Reste $L^3$, die sich von solchen Heterocyclen ableiten, gehorchen insbesondere der Formel

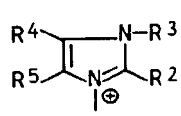 ,

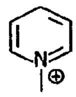

oder

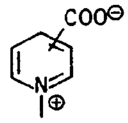

,

worin $R^2$, $R^4$ und $R^5$ gleich oder verschieden sind und unabhängig voneinander Wasserstoff oder $C_1$-$C_4$-Alkyl und $R^3$ Wasserstoff oder $C_1$-$C_{18}$-Alkyl, dabei insbesondere $C_1$-$C_4$-Alkyl, bedeuten.

Die Reaktivfarbstoffe der Formel I liegen üblicherweise in Form von inneren Salzen vor, d.h. wenn der kationische heterocyclische Rest $L^3$ z.B. über eine Carboxylgruppe verfügt, weist er als Gegenion das Carboxylatanion auf, in allen übrigen Fällen tritt als Gegenion das Sulfonatanion auf.

Bevorzugt sind Reaktivfarbstoffe der Formel I, in der X einen Rest der Formel IIa oder IIb und $L^1$ im Fall a1), wenn n für 1 und X für einen Rest der Formel IIb stehen, Chlor, im Fall a2), wenn n für 1 und X für einen Rest der Formel IIa stehen, $C_1$-$C_4$-Alkyl oder Phenyl, das gegebenenfalls durch Hydroxysulfonyl, Vinylsulfonyl oder den Rest $-SO_2-C_2H_4-Z$, worin Z für eine unter alkalischen Reaktionsbedingungen abspaltbare Gruppe steht, einfach oder zweifach substituiert ist, oder im Fall b1), wenn n für 2 und X für einen Rest der Formel IIa stehen, ein Brückenglied, das eine oder zwei Hydroxysulfonylgruppen aufweist, bedeuten.

Bevorzugt sind weiterhin Reaktivfarbstoffe der Formel I, in der D den Rest einer Diazokomponente aus der Anilinreihe bedeutet, der ein oder zwei Hydroxysulfonylgruppen aufweist.

Besonders bevorzugt sind Reaktivfarbstoffe der Formel Ia

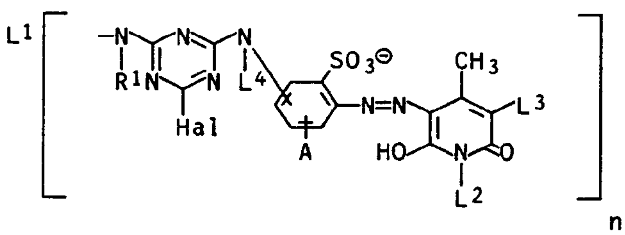

(Ia),

in der

| | |
|---|---|
| n, $R^1$, Hal, $L^3$ und $L^4$ | jeweils die obengenannte Bedeutung besitzen, |
| $L^2$ | Wasserstoff oder $C_1$-$C_4$-Alkyl, |
| A | Wasserstoff oder Hydroxysulfonyl und |
| $L^1$ | wenn n für 1 steht, $C_1$-$C_4$-Alkyl oder Phenyl, das gegebenenfalls durch Hydroxysulfonyl, Vinylsulfonyl oder den Rest $-SO_2-C_2H_4-Z$, worin Z für eine unter alkalischen Reaktionsbedingungen abspaltbare Gruppe steht, einfach oder zweifach substituiert ist, oder, wenn n für 2 steht, Mono- oder Dihydroxysulfonylphenylen, Mono- oder Dihydroxysulfonylbiphenylen, Mono- oder Dihydroxysulfonylstilbendiyl oder Mono- oder Dihydroxysulfonyl-4,4'-ureylen-bis-phenyl bedeuten. |

Besonders hervorzuheben sind Reaktivfarbstoffe der Formel Ia, in der $L^3$ den kationischen Rest eines Heterocyclus aus der Imidazol- oder Pyridinreihe, der über das Stickstoffatom an den Pyridonring geknüpft ist, bedeutet.

Insbesondere zu nennen sind Reaktivfarbstoffe der Formel Ia, in der $L^3$ den Rest der Formel

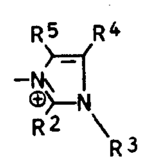

bedeutet, worin

$R^2$, $R^3$, $R^4$ und $R^5$ unabhängig voneinander jeweils Wasserstoff oder $C_1$-$C_4$-Alkyl bedeuten.

Die erfindungsgemäßen Reaktivfarbstoffe der Formel I können nach an sich bekannten Methoden hergestellt werden.

Beispielsweise kann man eine Diazokomponente der Formel III

$L^4$-NH-D-$NH_2$ (III),

in der $L^4$ und D jeweils die obengenannte Bedeutung besitzen, mit einem Halogenheterocyclus der Formel IVa oder IVb

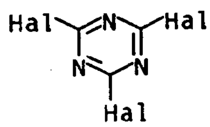

(IVa)

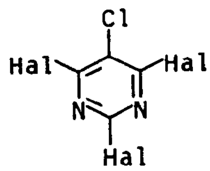

(IVb) ,

wobei Hal, Fluor oder Chlor bedeutet, umsetzen und das resultierende Kondensationsprodukt der Formel Va oder Vb

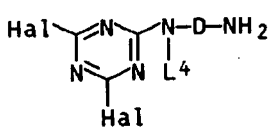

(Va)

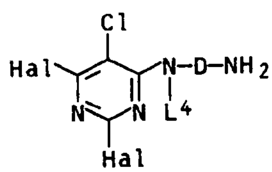

(Vb) ,

wobei Hal, $L^4$ und D jeweils die obengenannte Bedeutung besitzen, mit einem $C_1$-$C_4$-Alkanol, Phenol oder mit einem Amin der Formel VI

$L^1$(-NH-$R^1$)$_n$ (VI),

in der $L^1$, $R^1$ und n jeweils die obengenannte Bedeutung besitzen, zur Reaktion bringen. In Abhängigkeit von n sollte dabei ein Molverhältnis Kondensationsprodukt Va/Vb: Amin VI von ca. 1 : 1 oder 2 : 1 eingehalten werden.

Die resultierende Zwischenverbindung der Formel VII

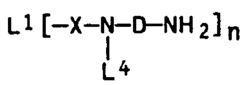

(VII),

in der $L^1$, X, $L^4$, D und n jeweils die obengenannte Bedeutung besitzen, wird dann diazotiert und mit einem Pyridon der Formel VIII

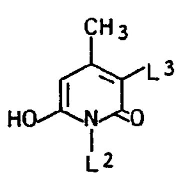

An$^\ominus$ (VIII),

in der $L^2$ und $L^3$ jeweils die obengenannte Bedeutung besitzen und An$^\ominus$ das Äquivalent eines Anions, z.B. Halogenid, wie Chlorid, Bromid oder Iodid, oder Sulfat, bedeutet, gekuppelt. (Wenn der Rest $L^3$ sich von einer Pyridincarbonsäure ableitet, ist selbstverständlich kein externes Anion An$^\ominus$ vorhanden, da dann der Rest $L^3$, wie oben bereits ausgeführt, als inneres Salz vorliegt.)

Es ist auch möglich das Kondensationsprodukt Va oder Vb zu diazotieren und mit dem Pyridon VIII zu kuppeln, man gelangt auf diese Weise zu den Reaktivfarbstoffen der Formel Ib oder Ic

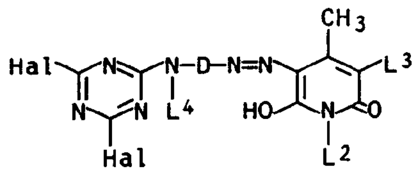

(Ib)

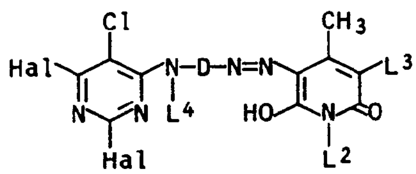

(Ic) ,

wobei Hal, $L^4$, D, $L^2$ und $L^3$ jeweils die obengenannte Bedeutung besitzen. Diese können dann gegebenenfalls noch mit einem Amin der Formel VI zur Reaktion gebracht werden.

Die neuen Reaktivfarbstoffe der Formel I eignen sich in vorteilhafter Weise zum Färben oder Bedrucken von Hydroxygruppen oder Stickstoff enthaltenden organischen Substraten. Solche Substrate sind beispielsweise Leder oder Fasermaterial, das überwiegend natürliche oder synthetische Polyamide oder natürliche oder regenerierte Cellulose enthält. Vorzugsweise eignen sich die neuen Farbstoffe zum Färben oder Bedrucken von Textilmaterial auf der Basis von Wolle oder insbesondere von Baumwolle.

Die erfindungsgemäßen Farbstoffe ergeben brillante grünstichig gelbe bis goldgelbe Färbungen, die eine hohe Lichtechtheit sowie gute Naßechtheiten, dabei insbesondere eine hohe Peroxidwaschechtheit und Peroxidbleichechtheit, aufweisen.

Die folgenden Beispiele sollen die Erfindung näher erläutern.

Beispiel 1

25,3 g (0,1 mol) Anilin-2,5-disulfonsäure wurden in 200 ml Wasser bei einem pH-Wert von 7 gelöst und bei 0°C mit einer Suspension von 18,5 g (0,1 mol) Cyanurchlorid in 250 ml Eiswasser versetzt. Durch Zugabe von Natriumbicarbonat wurde innerhalb von 2 Stunden ein pH-Wert von 6 bis 7 bei einer Temperatur von 0 bis 5°C eingehalten.

Nachdem keine freien Aminogruppen mehr nachweisbar waren, wurde filtriert und das Filtrat mit einer neutralen Lösung von 18,8 g (0,1 mol) 1,3-Diaminobenzol-4-sulfonsäure in 200 ml Wasser versetzt. Nun wurde bei 15 bis 20°C und einem pH-Wert von 6 bis 7 bis zum dünnschichtchromatographisch ermittelten Ende der Umsetzung gerührt. Das so erhaltene sekundäre Kondensationsprodukt wurde bei 0 bis 5°C salzsauer diazotiert und mit 24,2 g 3-(3-Methylimidazol-1-ylium)-4-methyl-6-hydroxypyrid-2-on-hydrochlorid versetzt. Durch Zugabe von Natriumbicarbonat wurde die Kupplung bei einem pH-Wert von 6 bis 7 zu Ende geführt. Nach Aussalzen mit Natriumchlorid wurde der Farbstoff der Formel

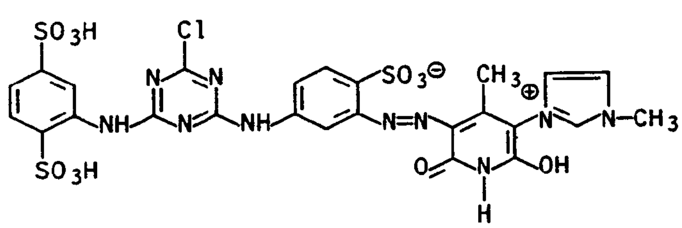

erhalten. Er färbt Baumwolle in brillantem grünstichig gelben Ton mit guter Lichtechtheit und guten Naßechtheiten, insbesondere guter Peroxidwasch- und bleichechtheit.

Beispiel 2

55,3 g (0,1 mol) des sekundären Kondensationsproduktes aus 1,3-Diaminobenzol-4,6-disulfonsäure, Cyanurchlorid und Anilin-4-sulfonsäure wurden in 600 ml Eiswasser salzsauer diazotiert und mit 24,2 g (0,1 mol) 3-(3-Methylimidazol-1-ylium)-4-methyl-6-hydroxypyrid-2-on-hydrochlorid versetzt. Durch Zugabe von Natriumbicarbonat wurde die Kupplung bei einem pH-Wert von 6 bis 7 zu Ende geführt und der gebildete Farbstoff durch Zugabe von Natriumchlorid ausgefällt. Er entspricht der Formel

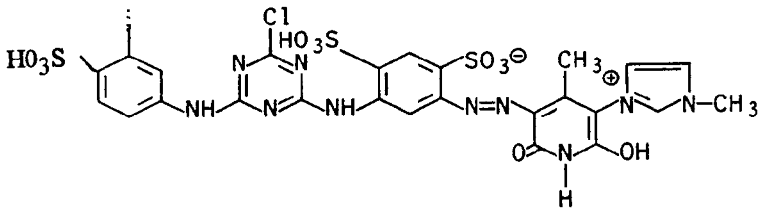

und färbt Baumwolle in brillantem grünstichig gelben Farbton mit guter Lichtechtheit und guten Naßechtheiten, insbesondere guter Peroxidwasch- und -bleichechtheit.

Analog Beispiel 1 und 2 werden die Beispiele der Tabelle 1 erhalten.

Tabelle 1

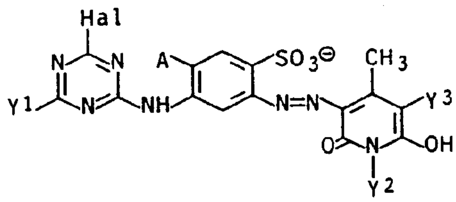

| Bsp. Nr. | Y1 | Hal | A | Y2 | Y3 | Farbton auf Baumwolle |
|---|---|---|---|---|---|---|
| 3 | 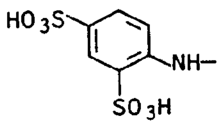 | Cl | H | H | 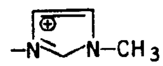 | grünstichig gelb |
| 4 | 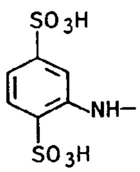 | F | H | H | 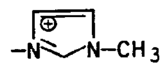 | grünstichig gelb |
| 5 | 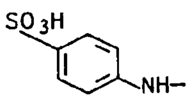 | Cl | H | H | 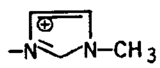 | grünstichig gelb |
| 6 | 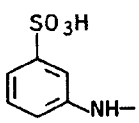 | Cl | H | H | 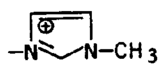 | grünstichig gelb |
| 7 | 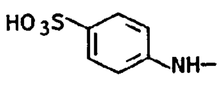 | Cl | $SO_3H$ | H | 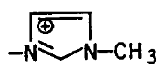 | grünstichig gelb |
| 8 | 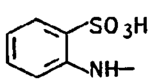 | Cl | $SO_3H$ | H | 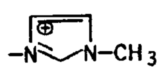 | grünstichig gelb |

Tabelle 1 (Fortsetzung)

| Bsp. Nr. | Y1 | Hal | A | Y2 | Y3 | Farbton auf Baumwolle |
|---|---|---|---|---|---|---|
| 9 | 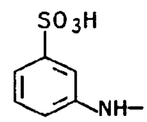 | F | H | H | 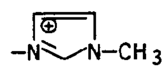 | grünstichig gelb |
| 10 | 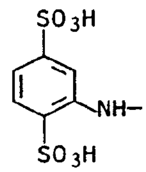 | Cl | H | $CH_3$ | 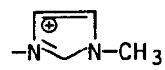 | grünstichig gelb |
| 11 | 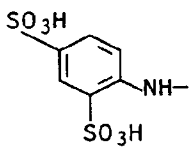 | Cl | H | $CH_3$ | 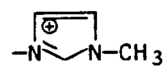 | grünstichig gelb |
| 12 | 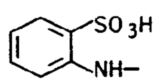 | Cl | $SO_3H$ | $CH_3$ | 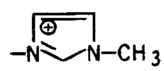 | grünstichig gelb |
| 13 | 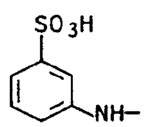 | Cl | $SO_3H$ | $CH_3$ | 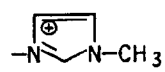 | grünstichig gelb |
| 14 | 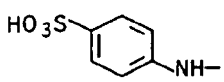 | Cl | $SO_3H$ | $CH_3$ | 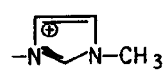 | grünstichig gelb |
| 15 | 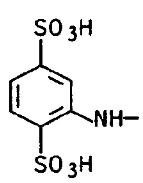 | Cl | H | $C_2H_5$ | 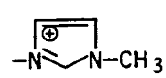 | grünstichig gelb |
| 16 | 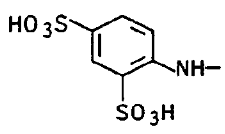 | Cl | H | $C_2H_5$ | 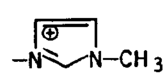 | grünstichig gelb |

Tabelle 1 (Fortsetzung)

| Bsp. Nr. | $Y^1$ | Hal | A | $Y^2$ | $Y^3$ | Farbton auf Baumwolle |
|---|---|---|---|---|---|---|
| 17 | 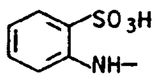 | Cl | $SO_3H$ | $C_2H_5$ | 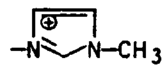 | grünstichig gelb |
| 18 | 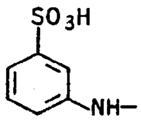 | Cl | $SO_3H$ | $C_2H_5$ | 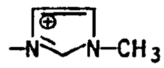 | grünstichig gelb |
| 19 | 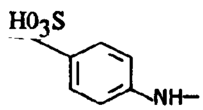 | Cl | $SO_3H$ | $C_2H_5$ | 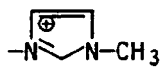 | grünstichig gelb |
| 20 | Cl | Cl | $SO_3H$ | H | 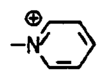 | grünstichig gelb |
| 21 | 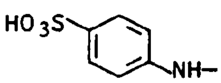 | Cl | $SO_3H$ | H | 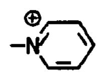 | grünstichig gelb |
| 22 | 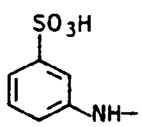 | Cl | $SO_3H$ | H | 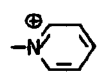 | grünstichig gelb |
| 23 | 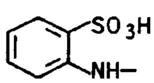 | Cl | $SO_3H$ | H | 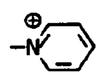 | grünstichig gelb |
| 24 | 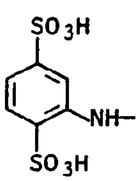 | Cl | H | H | 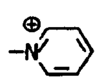 | grünstichig gelb |

Tabelle 1 (Fortsetzung)

| Bsp. Nr. | Y1 | Hal | A | Y2 | Y3 | Farbton auf Baumwolle |
|---|---|---|---|---|---|---|
| 25 | 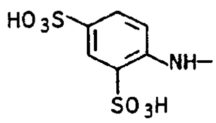 | Cl | H | H | 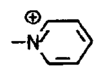 | grünstichig gelb |
| 26 | 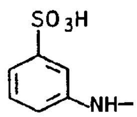 | Cl | H | H | 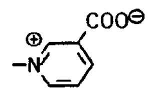 | grünstichig gelb |
| 27 | 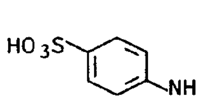 | Cl | H | H | 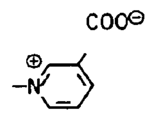 | grünstichig gelb |
| 28 | 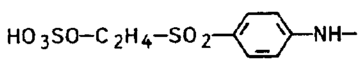 | Cl | H | H | 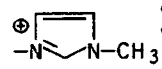 | grünstichig gelb |
| 29 | 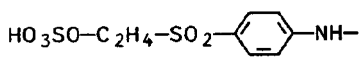 | Cl | $SO_3H$ | H | 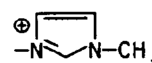 | grünstichig gelb |
| 30 | 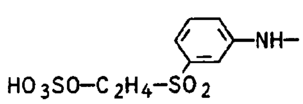 | Cl | H | H | 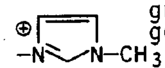 | grünstichig gelb |
| 31 | 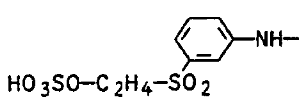 | F | H | H | 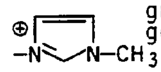 | grünstichig gelb |
| 32 | 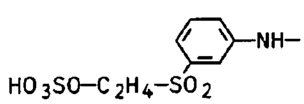 | Cl | $SO_3H$ | H | 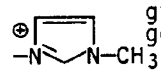 | grünstichig gelb |
| 33 | 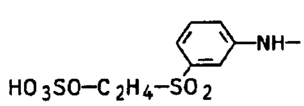 | Cl | $SO_3H$ | H | 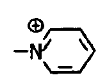 | grünstichig gelb |

Beispiel 34

33,6 g (0,1 mol) des Kondensationsproduktes aus 1,3-Diaminobenzol-4-sulfonsäure und Cyanurchlorid wurden in 500 ml Eiswasser bei einem pH-Wert von 6 bis 7 und 30 bis 35°C mit 10,1 g (0,05 mol) 1-Amino-3-methylaminobenzol-4-sulfonsäure bis zur dünnschichtchromatographisch ermittelten vollständigen Umsetzung gerührt. Anschließend wurde salzsauer diazotiert und mit 24,2 g 3-(3-Methylimidazol-1-ylium)-4-methyl-6-hydroxypyrid-2-on-hydrochlorid versetzt. Durch Zusatz von Natriumbicarbonat wurde die Kupplung bei einem pH-Wert von 6 bis 7 zu Ende geführt. Der erhaltene Farbstoff entspricht der Formel

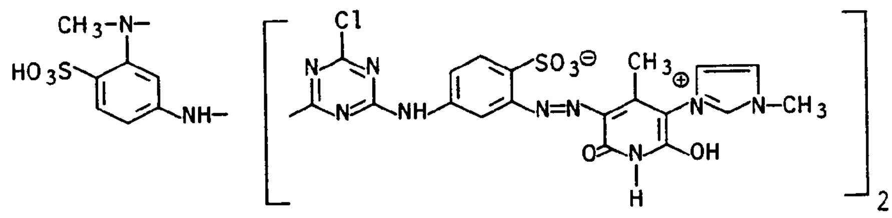

Er wurde mit Natriumchlorid ausgefällt und färbt Baumwolle in grünstichig gelbem Ton mit guter Lichtechtheit und guten Naßechtheiten.

Analog Beispiel 34 werden die in Tabelle 2 aufgeführten Farbstoffe erhalten.

Tabelle 2

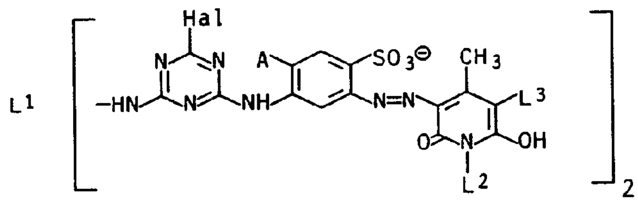

| Bsp. Nr. | $L^1$ | Hal | A | $L^2$ | $L^3$ | Farbton auf Baumwolle |
|---|---|---|---|---|---|---|
| 35 | 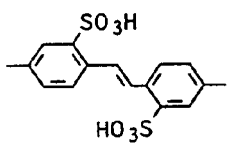 | Cl | $SO_3H$ | H | 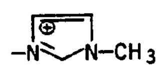 | grünstichig gelb |
| 36 | 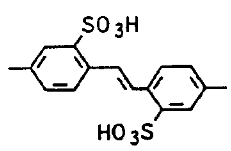 | Cl | H | H | 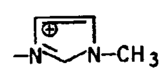 | grünstichig gelb |

Tabelle 2 (Fortsetzung)

| Bsp. Nr. | $L^1$ | Hal | A | $L^2$ | $L^3$ | Farbton auf Baumwolle |
|---|---|---|---|---|---|---|
| 37 | 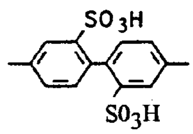 | Cl | $SO_3H$ | H | 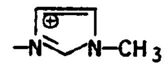 | grünstichig gelb |
| 38 | 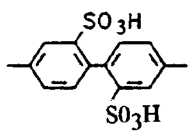 | Cl | H | H | 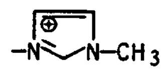 | grünstichig gelb |
| 39 | 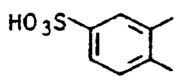 | Cl | $SO_3H$ | H | 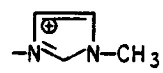 | grünstichig gelb |
| 40 | 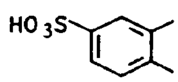 | Cl | H | H | 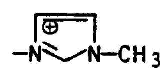 | grünstichig gelb |
| 41 | 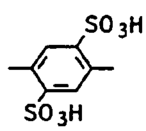 | Cl | $SO_3H$ | H | 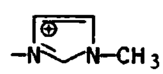 | grünstichig gelb |
| 42 | 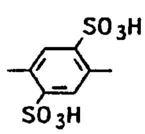 | Cl | H | H | 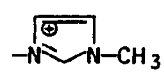 | grünstichig gelb |
| 43 | 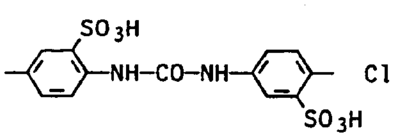 | Cl | $SO_3H$ | H | 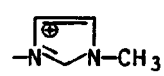 | grünstichig gelb |
| 44 | 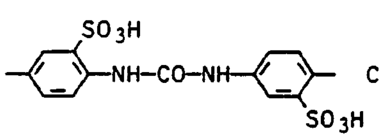 | Cl | H | H | 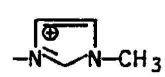 | grünstichig gelb |

Beispiel 45

Man verfuhr analog Beispiel 1 verwendete jedoch anstelle von 1,3-Diaminobenzol-4-sulfonsäure 1,4-Diaminobenzol-2-sulfonsäure und erhielt nach Aussalzen mit Natriumchlorid den Farbstoff der Formel

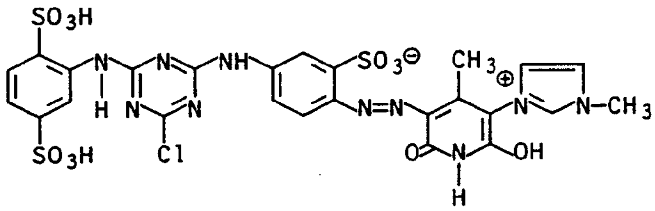

Er färbt Baumwolle in goldgelbem Farbton von mit guter Lichtechtheit und guten Naßechtheiten. Analog Beispiel 2 werden die in Tabelle 3 aufgeführten Farbstoffe erhalten.

Tabelle 3

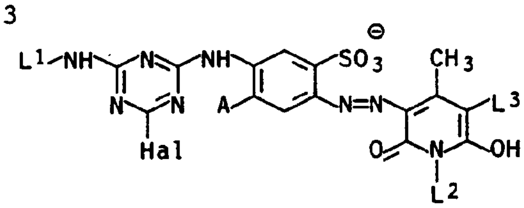

| Bsp. Nr. | $L^1$ | Hal | A | $L^2$ | $L^3$ | Farbton auf Baumwolle |
|---|---|---|---|---|---|---|
| 46 | 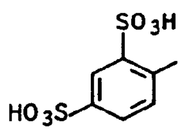 | Cl | H | H | 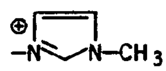 | goldgelb |
| 47 | 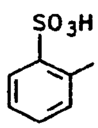 | Cl | $SO_3H$ | H | 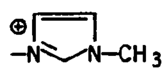 | goldgelb |
| 48 | 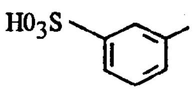 | Cl | $SO_3H$ | H | 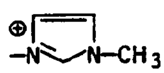 | goldgelb |

Tabelle 3 (Fortsetzung)

| Bsp. Nr. | $L^1$ | Hal | A | $L^2$ | $L^3$ | Farbton auf Baumwolle |
|---|---|---|---|---|---|---|
| 49 | 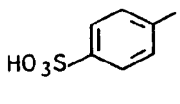 | Cl | $SO_3H$ | H | 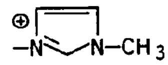 | goldgelb |
| 50 | 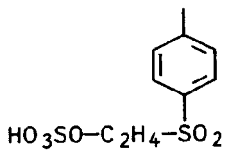 | Cl | $SO_3H$ | H | 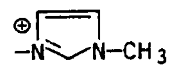 | goldgelb |
| 51 | 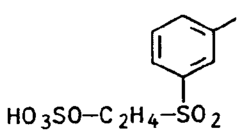 | Cl | $SO_3H$ | H | 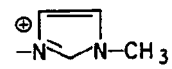 | goldgelb |
| 52 | 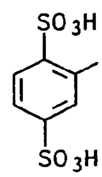 | Cl | H | H | 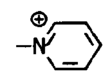 | goldgelb |
| 53 | 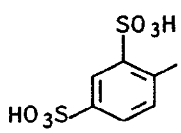 | Cl | H | H | 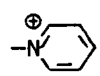 | goldgelb |
| 54 | 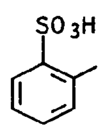 | Cl | $SO_3H$ | H | 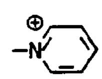 | goldgelb |
| 55 | 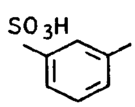 | Cl | $SO_3H$ | H | 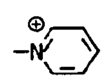 | goldgelb |
| 56 | 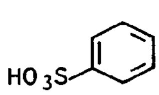 | Cl | $SO_3H$ | H | 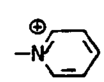 | goldgelb |

Beispiel 57

41,6 g des Kondensationsproduktes aus 1,4-Diaminobenzol-2,5-disulfonsäure und Cyanurchlorid wurden in 500 ml Eiswasser salzsauer diazotiert und mit 24,2 g 3-(3-Methylimidazol-1-ylium)-4-methyl-6-hydroxypyrid-2-on-hydrochlorid versetzt. Durch Anheben des pH-Wertes auf 6 bis 7 wurde die Kupplung zu Ende geführt.

Nun wurden 9,4 g (0,05 mol) 1,2-Diaminobenzol-3-sulfonsäure, in 200 ml Wasser neutral gelöst, zugesetzt und 2 Stunden bei einem pH-Wert von 6 bis 7 und 40 bis 45°C gerührt. Nach beendeter Umsetzung wurde durch Zugabe von Natriumchlorid ausgesalzen und der erhaltene Farbstoff der Formel

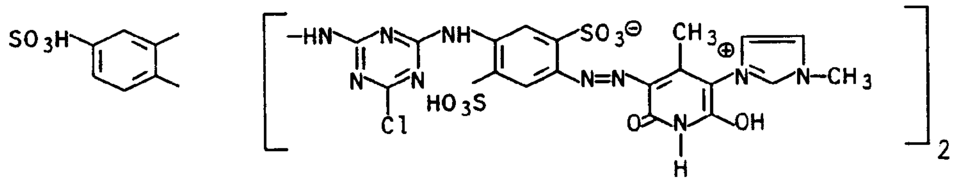

abfiltriert. Er färbt Baumwolle in brillantem goldgelben Ton mit guter Lichtechtheit und guten Naßechtheiten.

In analoger Weise werden die in Tabelle 4 aufgeführten Farbstoffe erhalten.

Tabelle 4

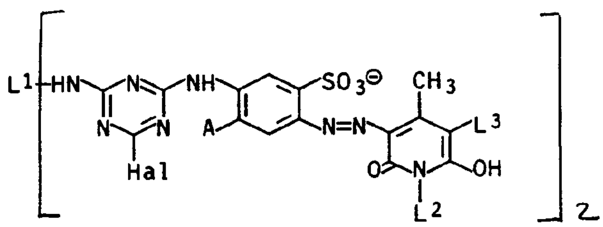

| Bsp. Nr. | L1 | Hal | A | L2 | L3 | Farbton auf Baumwolle |
|---|---|---|---|---|---|---|
| 58 | 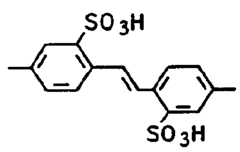 | Cl | $SO_3H$ | H | 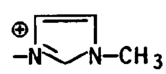 | grünstichig gelb |
| 59 | 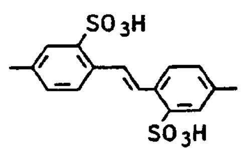 | Cl | H | H | 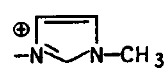 | grünstichig gelb |

Tabelle 4 (Fortsetzung)

| Bsp. Nr. | L1 | Hal | A | L2 | L3 | Farbton auf Baumwolle |
|---|---|---|---|---|---|---|
| 60 | 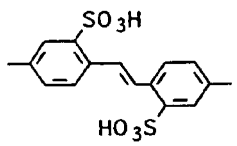 | Cl | $SO_3H$ | H | 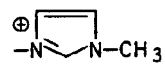 | grünstichig gelb |
| 61 | 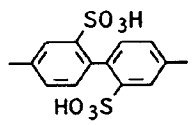 | Cl | H | H | 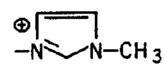 | grünstichig gelb |
| 62 | 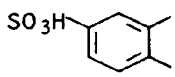 | Cl | H | H | 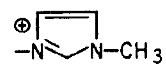 | grünstichig gelb |
| 63 | 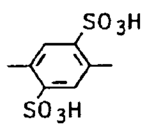 | Cl | $SO_3H$ | H | 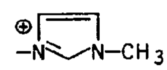 | grünstichig gelb |
| 64 | 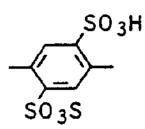 | Cl | H | H | 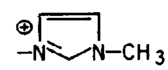 | grünstichig gelb |
| 65 | 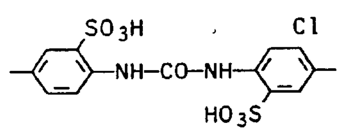 | Cl | $SO_3H$ | H | 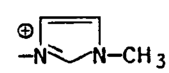 | grünstichig gelb |
| 66 | 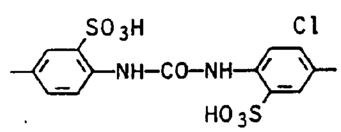 | Cl | H | H | 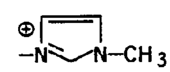 | grünstichig gelb |

Beispiel 67

17,3 g (0,1 mol) Anilin-3-sulfonsäure wurden in 200 ml Wasser bei einem pH-Wert von 7 gelöst und mit einer Suspension von 18,5 g (0,1 mol) Cyanurchlorid in 200 ml Eiswasser versetzt. Nachdem keine freien Aminogruppen mehr nachweisbar waren, wurde filtriert. Das Filtrat wurde mit einer neutralen Lösung von 2,02 g (0,1 mol) 1-(N-Methylaminomethyl)-3-aminobenzol-4-sulfonsäure in 300 ml Wasser versetzt und 2 Stunden bei 30°C und einem pH-Wert von 8,5 bis 9 gerührt.

Das erhaltene sekundäre Kondensationsprodukt wurde bei 0 bis 5°C salzsauer diazotiert und mit 24,2 g (0,1 mol) 3-(3-Methylimidazol-1-ylium)-4-methyl-6-hydroxypyrid-2-on-hydrochlorid versetzt. Durch Anheben des pH-Wertes auf 6 bis 7 wurde die Kupplung zu Ende geführt. Die entstandene Suspension wurde mit Natriumchlorid ausgesalzen und abfiltriert. Der erhaltene Farbstoff entspricht der Formel

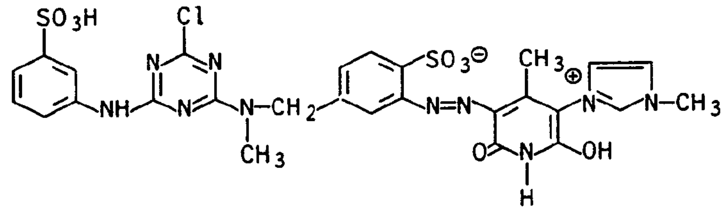

und färbt Baumwolle in brillantem grünstichig gelben Farbton mit guter Lichtechtheit und guten Naßechtheiten.

Beispiel 68

Zu 25,7 g (0,1 mol) des salzsauer diazotierten Kondensationsproduktes aus 5-Chlor-2,4,6-trifluorpyrimidin und 1,3-Diaminobenzol-4,6-disulfonsäure wurden bei 0 bis 5°C 24,3 g (0,1 mol) 3-(3-Methylimidazol-1-ylium)-4-methyl-6-hydroxypyrid-2-on-hydrochlorid gegeben. Durch Zugabe von Natriumbicarbonat wurde die Kupplung bei einem pH-Wert von 6 bis 7 beendigt. Der erhaltene Farbstoff der Formel

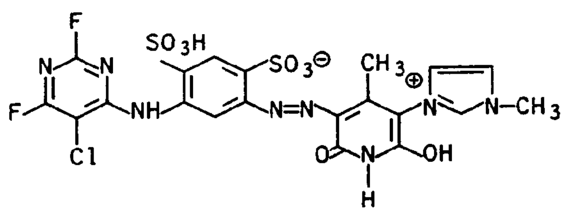

wurde durch Zugabe von Natriumchlorid abgeschieden und färbt Baumwolle in brillantem grünstichig gelben Farbton und guter Lichtechtheit und guten Naßechtheiten.

## Patentansprüche

1. Reaktivfarbstoffe der Formel I

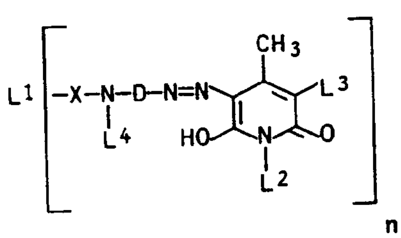

(I),

in der

n 1 oder 2,

X im Fall a), wenn n für 1 steht, einen Rest der Formel IIa, IIb oder IIc

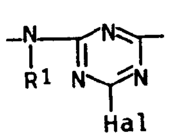

(IIa)

,

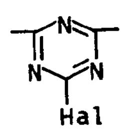

(IIb)

,

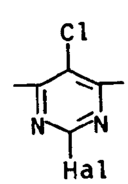

(IIc)

,

worin $R^1$ für Wasserstoff oder $C_1$-$C_4$-Alkyl und Hal für Fluor oder Chlor stehen, oder im Fall b), wenn n für 2 steht, einen Rest der obengenannten Formel IIa,

$L^1$ im Fall a1), wenn n für 1 und X für einen Rest der Formel IIb oder IIc stehen, Fluor, Chlor, $C_1$-$C_4$-Alkoxy oder Phenoxy,
im Fall a2), wenn n für 1 und X für einen Rest der Formel IIa stehen, $C_1$-$C_4$-Alkyl oder Phenyl, das gegebenenfalls durch Hydroxysulfonyl, Vinylsulfonyl oder den Rest

$$-SO_2-C_2H_4-Z\ ,$$

worin Z für eine unter alkalischen Reaktionsbedingungen abspaltbare Gruppe steht, einfach oder zweifach substituiert ist, oder
im Fall b1), wenn n für 2 und X für einen Rest der Formel IIa stehen, ein Brückenglied, das eine oder zwei Hydroxysulfonylgruppen aufweist,

D den Rest einer Diazokomponente aus der Anilin- oder Aminonaphthalinreihe, der mindestens eine Hydroxysulfonylgruppe aufweist,

$L^2$ Wasserstoff oder $C_1$-$C_8$-Alkyl, das gegebenenfalls durch Hydroxy substituiert ist und durch ein oder zwei Sauerstoffatome in Etherfunktion unterbrochen sein kann,

$L^3$ den kationischen Rest eines fünf- oder sechsgliedrigen aromatischen Heterocyclus, der mindestens ein Stickstoffatom und gegebenenfalls ein oder zwei weitere Heteroatome, ausgewählt aus der Gruppe, bestehend aus Stickstoff, Sauerstoff und Schwefel, aufweist und der über das Stickstoffatom an den Pyridonring geknüpft ist, und

$L^4$ Wasserstoff oder $C_1$-$C_4$-Alkyl bedeuten,

mit der Maßgabe, daß die Anzahl der Hydroxysulfonylgruppen im Molekül die der kationischen Gruppen um mindestens eins übersteigt.

2. Reaktivfarbstoffe nach Anspruch 1, dadurch gekennzeichnet, daß X einen Rest der Formel IIa oder IIb und $L^1$ im Fall a1), wenn n für 1 und X für einen Rest der Formel IIb stehen, Chlor,
im Fall a2), wenn n für 1 und X für einen Rest der Formel IIa stehen, $C_1$-$C_4$-Alkyl oder Phenyl, das gegebenenfalls durch Hydroxysulfonyl, Vinylsulfonyl, oder den Rest

$$-SO_2-C_2H_4-Z\ ,$$

worin Z für eine unter alkalischen Reaktionsbedingungen abspaltbare Gruppe steht, einfach oder zweifach substituiert ist, oder
im Fall b1), wenn n für 2 und X für einen Rest der Formel IIa stehen, ein Brückenglied, das eine oder zwei Hydroxysulfonylgruppen aufweist, bedeuten.

3. Reaktivfarbstoffe nach Anspruch 1, dadurch gekennzeichnet, daß D den Rest einer Diazokomponente aus der Anilinreihe bedeutet, der ein oder zwei Hydroxysulfonylgruppen aufweist.

4. Reaktivfarbstoffe nach Anspruch 1, die der Formel Ia

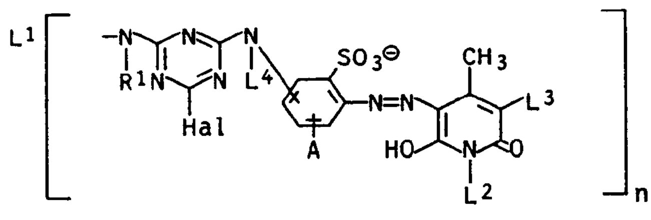

(Ia)

entsprechen, in der

n $R^1$, Hal, $L^3$ und $L^4$ jeweils die in Anspruch 1 genannte Bedeutung besitzen,

$L^2$ Wasserstoff oder $C_1$-$C_4$-Alkyl,

A Wasserstoff oder Hydroxysulfonyl und

$L^1$, wenn n für 1 steht, $C_1$-$C_4$-Alkyl oder Phenyl, das gegebenenfalls durch Hydroxysulfonyl, Vinylsulfonyl oder den Rest

$$-SO_2-C_2H_4-Z\ ,$$

worin Z für eine unter alkalischen Reaktionsbedingungen abspaltbare Gruppe steht, einfach oder zweifach substituiert ist, oder, wenn n für 2 steht, Mono- oder Dihydroxysulfonylphenylen, Mono- oder Dihydroxysulfonylbiphenylen, Mono- oder Dihydroxysulfonylstilbendiyl

oder Mono- oder Dihydroxysulfonyl-4,4'-ureylen-bis-phenyl bedeuten.

5. Verwendung der Reaktivfarbstoffe gemäß Anspruch 1 zum Färben oder Bedrucken von Hydroxygruppen oder Stickstoff enthaltenden Substraten.

## Claims

1. A reactive dye of the formula I

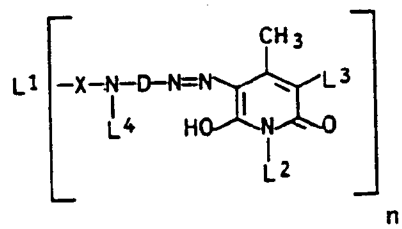

(I)

where

n is 1 or 2,

X in case a), when n is 1, is a radical of the formula IIa, IIb or IIc

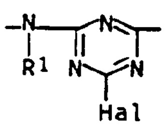 , 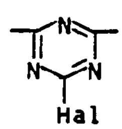 , 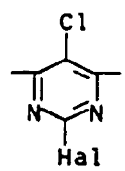 ,

(IIa) (IIb) (IIc)

where $R^1$ is hydrogen or $C_1$-$C_4$-alkyl and Hal is fluorine or chlorine, or in case b), when n is 2, is a radical of the above-mentioned formula IIa,

$L^1$ in case a1), when n is 1 and X is a radical of the formula IIb or IIc, is fluorine, chlorine, $C_1$-$C_4$-alkoxy or phenoxy,
in case a2), when n is 1 and X is a radical of the formula IIa, is $C_1$-$C_4$-alkyl or phenyl which may be monosubstituted or disubstituted by hydroxysulfonyl, vinylsulfonyl or the radical

$$-SO_2-C_2H_4-Z,$$

where Z is a group which is detachable under alkaline reaction conditions, or
in case b1), when n is 2 and X is a radical of the formula IIa, is a bridge member which has one or two hydroxysulfonyl groups,

D is the radical of a diazo component of the aniline or aminonaphthalene series which has at least one hydroxysulfonyl group,

$L^2$ is hydrogen or $C_1$-$C_8$-alkyl which may be hydroxyl-substituted and interrupted by one or two oxygen atoms in ether function,

$L^3$ is the cationic radical of a five- or six-membered aromatic heterocycle which has at least one nitrogen atom with or without one or two further hetero atoms selected from the group consisting of nitrogen, oxygen and sulfur and which is linked to the pyridone ring via the nitrogen atom, and

$L^4$ is hydrogen or $C_1$-$C_4$-alkyl,

with the proviso that the number of hydroxysulfonyl groups in the molecule exceeds that of the cationic groups by at least one.

2. A reactive dye as claimed in claim 1, wherein X is a radical of the formula IIa or IIb and $L^1$ in case a1), when n is 1 and X is a radical of the formula IIb, is chlorine,
in case a2), when n is 1 and X is a radical of the formula IIa, is $C_1$-$C_4$-alkyl or phenyl which may be monosubstituted or disubstituted by hydroxysulfonyl, vinylsulfonyl or the radical

$$-SO_2-C_2H_4-Z,$$

where Z is a group which is detachable under alkaline reaction conditions, or in case b1), when n is 2 and X is a radical of the formula IIa, is a bridge member which has one or two hydroxysulfonyl groups.

3. A reactive dye as claimed in claim 1, wherein D is the radical of a diazo component of the aniline series which has one or two hydroxysulfonyl groups.

4. A reactive dye as claimed in claim 1 which conforms to the formula Ia

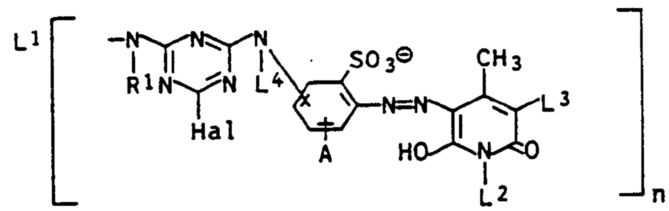 (Ia)

where

| | |
|---|---|
| n, $R^1$, Hal, $L^3$ and $L^4$ | are each as defined in claim 1, |
| $L^2$ | is hydrogen or $C_1$-$C_4$-alkyl, |
| A | is hydrogen or hydroxysulfonyl and |
| $L^1$, | when n is 1, is $C_1$-$C_4$-alkyl or phenyl which may be monosubstituted or disubstituted by hydroxysulfonyl, vinylsulfonyl or the radical $-SO_2-C_2H_4-Z$, where Z is a group which is detachable under alkaline reaction conditions, or, when n is 2, is mono- or dihydroxysulfonylphenylene, mono- or dihydroxysulfonylbiphenylene, mono- or dihydroxysulfonylstilbenediyl or mono- or dihydroxysulfonyl-4,4'-ureylenebisphenyl. |

5. The use of a reactive dye as claimed in claim 1 for dyeing or printing hydroxyl- or nitrogen-containing substrates.

## Revendications

1. Colorants réactifs de formule I

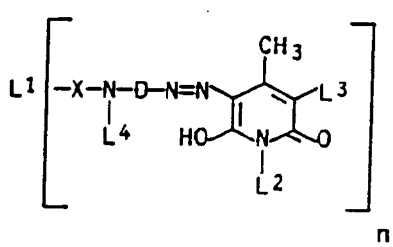 (I),

dans laquelle

n est 1 ou 2

X représente dans le cas a), lorsque n est mis pour 1, un reste de formule IIa, IIb ou IIc

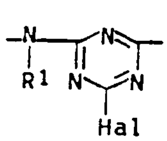 , 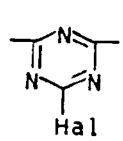 , 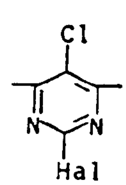 ,

(IIa) (IIb) (IIc)

dans lesquelles R′ est mis pour un atome d'hydrogène ou un groupe alkyle en $C_1$-$C_4$ et Hal pour un atome de fluor ou de chlore, ou

dans le cas b), lorsque n est mis pour 2, un reste de formule IIa ci-dessus,

$L^1$ est mis, dans le cas a1), lorsque n est mis pour 1 et X pour un reste de formule IIb ou IIc, pour un atome de fluor, de chlore, un groupe alcoxy en $C_1$-$C_4$ ou phénoxy, dans le cas a2), lorsque n est mis pour 1 et X pour un reste de formule IIa, pour un groupe alkyle en $C_1$-$C_4$ ou phényle, qui est éventuellement mono- ou di-substitué par un groupe hydroxysulfonyle, vinylsulfonyle ou par le reste

$$-SO_2-C_2H_4-Z\ ,$$

dans laquelle Z est mis pour un groupe pouvant être arraché dans des conditions réactionnelles basiques, ou

dans le cas b1), lorsque n est mis pour 2 et X pour un reste de formule IIa, pour un membre pontant qui présente un ou deux groupes hydroxysulfonyle,

D représente le reste d'un composant diazoïque de la série de l'aniline ou de l'aminonaphtalène, qui présente au moins un groupe hydroxysulfonyle,

$L^2$ représente un atome d'hydrogène ou un groupe alkyle en $C_1$-$C_8$, qui est éventuellement substitué par un groupe hydroxy et peut être interrompu par un ou deux atomes d'oxygène en fonction éther,

$L^3$ représente le reste cationique d'un hétérocycle aromatique à cinq ou six membres, qui présente au moins un atome d'azote et éventuellement un ou deux autres hétéroatomes, choisis dans le groupe constitué par l'azote, l'oxygène et le soufre, et qui est relié au cycle pyridone par l'atome d'azote, et

$L^4$ représente un atome d'hydrogène ou un groupe alkyle en $C_1$-$C_4$,

à condition que le nombre des groupes hydroxysulfonyle dans la molécule surpasse celui des groupes cationiques d'au moins une unité.

2. Colorants réactifs selon la revendication 1, caractérises en ce que X est mis pour un reste de formule IIa ou IIb et $L^1$, dans le cas a1), lorsque n est mis pour 1 et X pour un reste de formule IIb, pour un atome de chlore, dans le cas a2), lorsque n est mis pour 1 et X pour un reste de formule IIa, pour un groupe alkyle en $C_1$-$C_4$ ou phényle, qui est éventuellement mono- ou di-substitué par un groupe hydroxysulfonyle, vinylsulfonyle, ou par le reste

$$-SO_2-C_2H_4-Z\ ,$$

dans laquelle Z est mis pour un groupe pouvant être arraché dans des conditions réactionnelles alcalines, ou dans le cas b1), lorsque n est mis pour 2 et X pour un reste de formule IIa, pour un membre pontant, qui présente un ou deux groupes hydroxysulfonyle.

3. Colorants réactifs selon la revendication 1, caractérisés en ce que D représente le reste d'un composant diazoïque de la série de l'aniline, qui présente un ou deux groupes hydroxysulfonyle.

4. Colorants réactifs selon la revendication 1, qui correspondent à la formule Ia

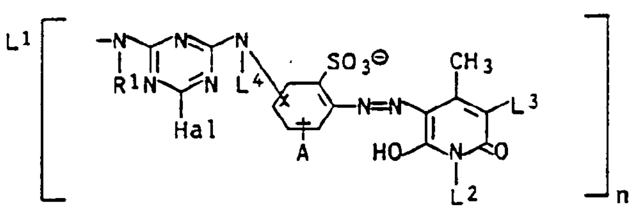

(Ia)

dans laquelle

n $R^1$, Hal, $L^3$ et $L^4$ ont chaque fois la signification indiquée dans la revendication 1,

$L^2$ représente un atome d'hydrogène ou un groupe alkyle en $C_1$-$C_4$,

A représente un atome d'hydrogène ou un groupe hydroxysulfonyle et

$L^1$ représente, lorsque n est mis pour 1, un groupe alkyle en $C_1$-$C_4$ ou phényle, qui est éventuellement mono- ou di-substitué par un groupe hydroxysulfonyle, vinylsulfonyle ou par le reste

$$-SO_2-C_2H_4-Z\ ,$$

dans laquelle Z est mis pour un groupe pouvant être arraché dans des

conditions réactionnelles alcalines, ou, lorsque n est mis pour 2, un groupe mono- ou dihydroxysulfonylphénylène, mono- ou dihydroxy- sulfonylbiphénylène, mono- ou dihydroxysulfonylstilbènediyle ou mono- ou dihydroxysulfonyl-4,4′-uréylène-bis-phényle.

5. Utilisation des colorants réactifs selon la revendication 1 pour la teinture ou l'impression de substrats contenant des groupes hydroxy ou de l'azote.